# EUROPÄISCHE PATENTSCHRIFT

(11) **EP 0 758 552 B1**
(45) Veröffentlichungstag und Bekanntmachung des Hinweises auf die Patenterteilung: **12.06.2002**
(21) Anmeldenummer: 96112920.2
(22) Anmeldetag: 11.08.1996
(51) Int. Cl.: E02F 3/36, E02F 9/22, F16L 37/00

(54) **Befestigung eines Werkzeuges an der Ladeschwinge einer fahrbaren Arbeitsmaschine**
Coupling of an implement to the loading arm of a construction machine
Fixation d'un outil au bras d'un engin de chantier

(30) Priorität: 11.08.1995 AT 136195
(43) Veröffentlichungstag der Anmeldung: 19.02.1997
(73) Patentinhaber: Mauch, Karl, Dipl.-Ing., 5274 Burgkirchen (AT)
(72) Erfinder: Mauch, Karl, Dipl.-Ing., 5274 Burgkirchen (AT)
(74) Vertreter: Dupal, Helmut, Dipl.-Ing.

(56) Entgegenhaltungen:
- WO-A-81/00295
- WO-A-91/01414
- DE-B- 2 856 556

## Beschreibung

Die Erfindung betrifft die lösbare Befestigung eines hydraulisch betätigbaren Werkzeuges an einem Arm einer mit einer Hydraulikanlage ausgerüsteten Maschine.
Die Erfindung ist insbesondere gut für Maschinen wie Traktoren oder fahrbaren Baumaschinen anzuwenden. Bei "Werkzeug" ist insbesondere an einen Pflug, eine Baggerschaufel oder eine Greiferzange zu denken. Im Normalfall ist der Arm der Maschine an dieser beweglich gelagert und mittels Hydraulik betätigbar. Eine derartige Befestigung ist in der DE-A-2856556 offenbart.
Wenn das Werkzeug an dem Arm mit Hilfe einer des weiteren als "Schnellwechselsystem" bezeichneten Befestigung fixiert ist, kann die Person, welche die Maschine steuert, das Befestigen und Lösen des Werkzeuges mit Hilfe der hydraulischen Steuerung vom Führerstand aus durchführen ohne im Berührungsbereich Arm-Werkzeug hantieren zu müssen. Bei einem hier beispielhaft angeführten, weit verbreiteten Schnellwechselsystem werden beim Befestigungsvorgang zuerst Werkzeug und Arm über eine Verhakung und eine Anschlagfläche in einer vertikalen Ebene in eine genau definierte Lage zueinander gebracht. Anschließend wird die Befestigung mit Hilfe von Bolzen, welche in dem Arm, normal auf diese Ebene beweglich gelagert sind, fixiert indem diese Bolzen in Bohrungen am Werkzeug - welche bei dieser Lage mit der Lagerung der Bolzen in dem Arm fluchten - eingeschoben werden. Die zur Fixierung des Werkzeuges an dem Arm dienenden Bolzen werden des weiteren Fixierbolzen genannt. In der auf die Fixierbolzen und Bohrungen parallel, und damit auf die zuerst genannte Ebene normal verlaufenden Richtung sind Werkzeug und Arm mit etwas Spiel über Anschlagflächen relativ zueinander festgelegt.
Dieses Schnellwechselsystem stellt, wie alle zur Zeit bekannten Schnellwechselsysteme, nur die Fixierung des Werkzeuges an dem Arm her. Nicht hergestellt wird die Verbindung der Hydraulikanlage der Maschine mit einer eventuell vorhandenen Hydraulikanlage des Werkzeuges. Diese Verbindung, also das Zusammenstecken von Kupplungselementen an Hydraulikschläuchen an dem Arm mit Kupplungselementen an Hydraulikschläuchen am Werkzeug muß von Hand aus, also doch durch Hantieren im Verbindungsbereich Arm-Werkzeug erfolgen. Die, die Maschine betätigende Person muß also dafür den Führerstand verlassen oder es muß eine zweite Person hinzugezogen werden.

Die der Erfindung zu Grunde liegende Aufgabe besteht darin, die Verbindung zwischen der Hydraulikanlage der Maschine und der Hydraulikanlage des Werkzeuges so auszuführen, daß sie vom Führerstand der Maschine aus hergestellt und gelöst werden kann.

Zur Lösung der Aufgabe werden die Hydraulikanlagen der Maschine und des Werkzeuges mittels einer Leitung über ein Kupplungselement in Verbindung gebracht, dessen eine Hälfte an einem Bolzen befestigt ist, welcher am Arm hydraulisch vorwärts und rückwärts beweglich angeordnet ist. Die zweite Kupplungshälfte ist am Werkzeug an einer Stelle befestigt, auf welche sich die erste Kupplungshälfte bei hydraulisch hervorgerufener Axialbewegung des Bolzens an dem sie befestigt ist hin bewegt bzw. von der sie sich weg bewegt, wenn sich Arm und Werkzeug in einer durch Anschlagflächen zueinander genau definierten Lage befinden. (Verhakungen werden in diesem Sinn als Spezialfall von Anschlagflächen angesehen.) Es wird ein Kupplungselement verwendet, mit dem die Kupplung zwischen zwei Hydraulikschläuchen durch eine lineare Relativbewegung der beiden Kupplungshälften zueinander bzw. voneinander geschlossen bzw. geöffnet werden kann. Die beiden Kupplungshälften sind so ausgerichtet und in einer solchen Entfernung voneinander angeordnet, daß sie durch die Bewegung des Bolzens in eine seiner Endstellungen verbunden werden und damit die Kupplung geschlossen wird. Der Weg des Bolzens ist mindestens so lang, daß die beiden Kupplungshälften vollkommen außer Eingriff kommen wenn der Bolzen in die andere Endstellung bewegt wird.

Entsprechend einer vorteilhaften Ausführung wird der Bolzen selbst mit einer durchgehenden Bohrung versehen und der zur Maschine gehörenden Teil der Hydraulikleitung wird durch diese Bohrung verlegt. An einer Seite der Bohrung ist die maschinenseitige Kupplungshälfte angeschlossen. In dieser Kupplungshälfte endet der zur Maschine gehörende Teil der Hydraulikleitung.

Der zum Öffnen und Schließen der Kupplung zwischen den Hydraulikanlagen an dem Arm und am Werkzeug dienende Bolzen wird des weiteren als "Kupplungsbolzen" bezeichnet. Vorzugsweise wird dieser Kupplungsbolzen auch gleich als Fixierbolzen verwendet, also als jener Bolzen, welcher in eine Bohrung am Werkzeug eingreift und so gemeinsam mit Anschlagflächen die Relativlage von Werkzeug und Arm zueinander fixiert.

Die Erfindung wird anhand der folgenden Prinzipzeichnungen anschaulicher:

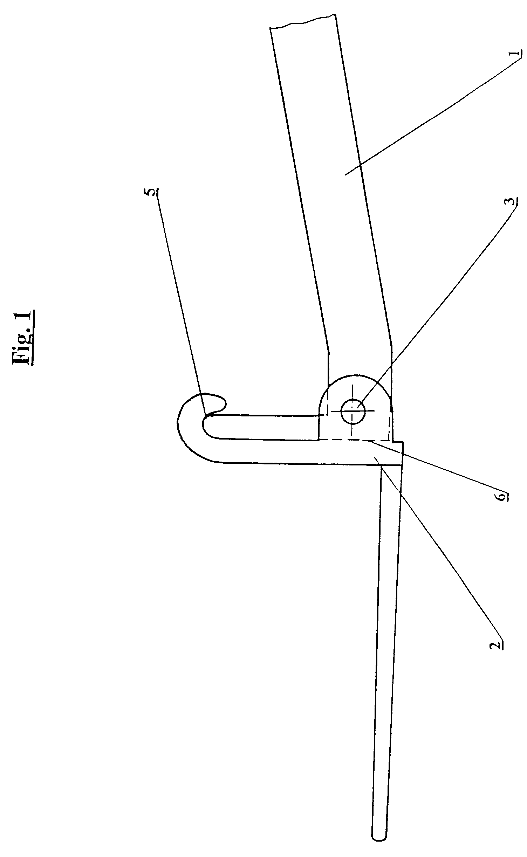

- Fig. 1: zeigt die Befestigung eines Werkzeuges an einem Arm mit Hilfe eines sog. Schnellwechselsystems. Da dabei auf die Darstellung von Teilen der Hydraulikanlage verzichtet wurde, gilt Fig. 1 sowohl für die vorbekannte Befestigungsmethode als auch für die Befestigungsmethode entsprechend der vorliegenden Anmeldung.

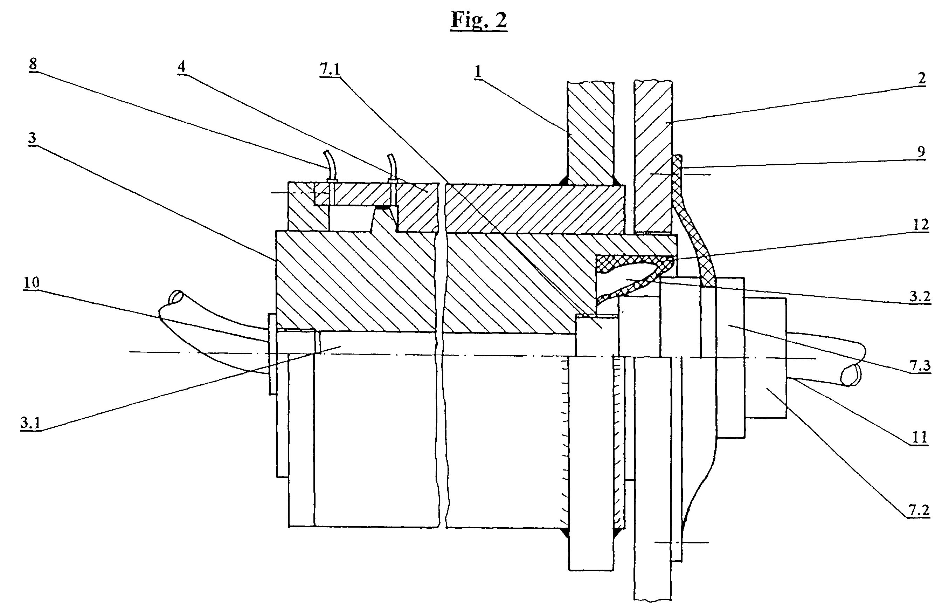

- Fig. 2: zeigt eine Teilschnittansicht einer erfindungsgemäßen Ausführung einer Befestigung bei der ein mit einer Bohrung versehener Kupplungsbolzen verwendet wird in geschlossenem Zustand. Die Schnittebene liegt parallel zur Achse des Bolzens. Das Kupplungselement ist nur symbolisiert dargestellten. Die Hydraulikflüssigkeit ist nicht dargestellt.

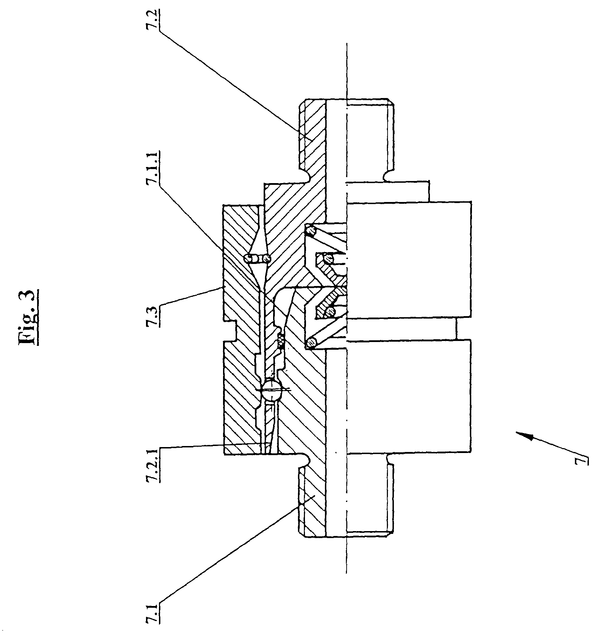

- Fig. 3: zeigt den prinzipiellen Aufbau des Kupplungselementes von Fig. 2 in einer achsparallelen Teilschnittansicht vergrößert.

Zum Herstellen der Verbindung werden Arm 1 und Werkzeug 2 zuerst in die in Fig. 1 dargestellte Relativlage zueinander gebracht. Dabei liegen die beiden Teile an der eine Anschlagfläche gegen vertikale Relativbewegung bildenden Verhakung 5 und an der gegen horizontale Relativbewegung wirkenden Anschlagfläche 6 aneinander an. Sie nehmen damit in der zur Zeichenebene parallel liegenden Ebene eine genau definierte Relativlage zueinander ein. In der auf die Zeichenebene normal stehenden Richtung wird die Relativlage der beiden Teile zueinander durch zwei zur Zeichenebene parallel liegende Anschlagflächen am Werkzeug zwischen denen der Arm eingesteckt wird, definiert. (Die beiden Anschlagflächen können natürlich auch eine sich keilförmig zum Arm hin erweiternde Nut bilden.) Nun wird der in einem Zylinder an dem Arm gelagerte, hydraulisch in seiner Achsrichtung bewegliche Bolzens 3 ausgefahren, sodaß er mit einer Bohrung am Werkzeug, welche bei dieser Lage mit dem Zylinder fluchtet, in Eingriff kommt. Damit ist die Relativlage zwischen Arm und Werkzeug nicht nur definiert sondern auch fixiert. Der Bolzen 3 dient somit als Fixierbolzen.
Nachdem sich Werkzeug und Arm in einer durch Anschlagflächen 5,6 zueinander genau definierten Lage befinden wird erfindungsgemäß ein hydraulisch beweglicher Bolzen, der sog. Kupplungsbolzen, an welchem das mit einer Kupplungshälfte versehene Ende des maschinenseitigen Teiles der Hydraulik-Verbindungsleitung befestigt ist, vom Arm aus auf das Werkzeug zu bewegt. Die zweite Kupplungshälfte ist am Werkzeug so angeordnet, daß dabei die Hydraulikkupplung geschlossen wird.

Fig. 2 zeigt eine Ausführung bei der die Hydraulikleitung durch den Kupplungsbolzen verläuft und obendrein die Funktionen des Kupplungsbolzens und des Fixierbolzen in einem einzigen Bolzen 3 vereint sind. Bei einer Ausführungsform gemäß Fig. 2 werden die Fixierung des Werkzeuges 2 an dem Arm 1 und der Anschluß der Hydraulikanlage des Werkzeuges an die Hydraulikanlage der Maschine mit einem einzigen Arbeitsschritt, nämlich dem Ausfahren des Bolzens 3 aus dem am Arm 1 befindlichen Zylinder 4 auf das Werkzeug zu, bewirkt.
Der Bolzen 3 kann durch die Hydraulikanlage der Maschine über die Anschlüsse 8 im Zylinder 4 in seiner Achsrichtung vor- und zurück bewegt werden. Der Bolzen weist eine durchgehende Bohrung 3.1 auf an deren einem Ende sich der Anschluß 10 zu der Hydraulikanlage der Maschine hin befindet. Am zweiten Ende der Bohrung 3.1, welche sich an der dem Werkzeug zugewandten Stirnseite des Bolzens befindet, ist die männliche Kupplungshälfte 7.1 der Hydraulikkupplung für die Verbindung zur Hydraulikanlage des Werkzeuges angebracht. Die weibliche Kupplungshälfte ist über das elastische Verbindungselement 9 und den zum Kupplungselement gehörenden Arretierungsring 7.3 am Werkzeug befestigt. Die Kupplungshälften sind mit ihren Achsen fluchtend zur Achse des Bolzens 3 und der darin befindlichen Bohrung 3.1 ausgerichtet. An der weiblichen Kupplungshälfte befindet sich der Anschluß 11 zur Hydraulikanlage des Werkzeuges. Die für das Verständnis der Erfindung wesentlichsten Funktionen des Kupplungselementes sind: (siehe auch Fig. 3)
- Bei geöffneter Kupplung wird durch jede der Kupplungshälften jene Hydraulikleitung an deren Ende die Kupplungshälfte angebracht ist, abgedichtet.
- Die Kupplung kann nicht in Folge von Kräften zwischen den beiden Teilen des Kupplungselementes, welche starr mit den Enden der beiden zu verbindenden Leitungen verbunden sind, geöffnet werden.
- Die Kupplung kann durch eine Druckkraft, welche in Achsrichtung zwischen dem mit der weiblichen Kupplungshälfte 7.2 elastisch verbundenen Arretierungsring 7.3 und der männlichen Kupplungshälfte 7.1 wirkt, geschlossen werden.
- Die Kupplung kann durch eine Zugkraft, welche in Achsrichtung zwischen Arretierungsring 7.3 und männlicher Kupplungshälfte 7.1 wirkt, geöffnet werden.
- Ein Schnappmechanismus bewirkt, daß beim Schließen der Kupplung die Kupplungshälften zueinander in die Stellung "geschlossen" einrasten und das zum Öffnen der Kupplung ein bestimmtes Kraftniveau, welches der Öffnungsbewegung entgegenwirkt, überwunden werden muß.
- Eine voll- bzw. hohlkegelförmige Abschrägung 7.1.1 bzw. 7.2.1 an der, der jeweils anderen Kupplungshälfte zugewandten Stirnseite der beiden Kupplungshälften erleichtert das Zusammenführen der beiden Kupplungshälften.
Die derzeit im Handel erhältlichen üblichen Kupplungselemente für die lösbare Verbindung von Hydraulikleitungen erfüllen alle diese Funktionen. Fig. 3 dient daher lediglich der Illustration von Bekanntem.
Das vorzugsweise elastische Verbindungsteil 9 verbindet den mit der weiblichen Kupplungshälfte elastisch verbundenen Arretierungsring 9 mit dem Werkzeug 2. Wenn das Verbindungsteil 9 elastisch ausgeführt ist, wird das Einrasten der Kupplungshälften aneinander zur Stellung "geschlossen" auch bei geringfügigen Lagetoleranzen von Werkzeug und Arm zueinander ermöglicht. Weiters können Beschädigungen vermieden werden, wenn die Kupplungshälften in Folge einer großen Lageabweichung oder weil ein Gegenstand zwischen sie geraten ist nicht ineinander gesteckt werden können, sondern durch die Wirkung des Kupplungsbolzens nur in Achsrichtung verschoben werden. Eine derartige Störung kann wegen der dabei auftretenden sichtbaren elastischen Verformung des Verbindungsteiles 9 leicht bemerkt werden. Der Weg-Bereich in welchem das Verbindungsteil elastisch verformt werden kann sollte deutlich länger sein, als der Weg-Bereich in welchem ein Einschnappen zwischen den beiden Kupplungshälften in die Stellung "geschlossen" erfolgen kann. Die Kraftänderung pro Wegänderung bei elastischer Verformung des Verbindungsteiles 9 sollte deutlich geringer sein als die Änderung der Kraft pro Wegänderung zwischen den beiden Kupplungshälften wenn diese in die Stellung "geschlossen" einrasten.
Das elastische Verbindungsteil kann beispielsweise aus einem festen elastischen Gewebe oder aus mehreren sternförmig zueinander angeordneten federnden Metallplättchen gebildet werden.
Vorzugsweise ist die männliche Kupplungshälfte 7.1 in einer bezüglich der Bohrung 3.1 erweiterten Öffnung 3.2 an der Stirnseite des Bolzens 3 angebracht, welche so tief ist, daß die Kupplungshälfte nicht daraus hervorragt. Die Öffnung 3.2 muß auch so weit sein, daß jener Teil der weiblichen Kupplungshälfte, welche die männliche Hälfte umschließt, Platz findet. An der Mantelfläche der Öffnung 3.2 kann ein Schutzring 12 aus einem weichen elastischen Material angebracht werden, welcher die Öffnung 3.2 bei geöffneter Kupplung ganz oder teilweise verschließt. Dabei ist allerdings zu bedenken, daß ein derartiger Verschluß nicht nur das Eindringen von Schmutz und Nässe erschwert, sondern auch das Herausfallen bzw. Austrocknen davon.

Selbstverständlich können die beiden Kupplungshälften auch gegeneinander vertauscht angeordnet werden.

Anstatt die Bohrung 3.1 direkt mit Hydraulikflüssigkeit in Kontakt zu bringen, kann auch ein zur Hydraulikanlage der Maschine gehörender Schlauch durch die Bohrung 3.1 durchgeführt werden und an der dem Werkzeug zugewandten Stirnseite des Bolzens zusammen mit einer Kupplungshälfte fixiert werden.

Dem Problem, daß sensible Bereiche der Kupplungshälften verschmutzt werden können, wenn Werkzeug und Arm voneinander getrennt sind, kann beispielsweise auf folgende Weise besser beigekommen werden:
An Werkzeug und Arm wird jeweils ein Schieber angebracht, welcher in der auf die Anschlagflächen (5,6) normal stehenden Ebene über Führungsschienen oder eine Schwenklagerung beweglich gelagert ist. Wenn Werkzeug und Arm voneinander getrennt sind werden die Schieber durch die Wirkung der Schwerkraft oder einer Feder und eventuell eines Endanschlages genau so gehalten, daß die Kupplungshälften abgedeckt werden. An Werkzeug und Arm werden Vorsprünge vorgesehen, welche bei jener Relativbewegung der beiden Teile, welche sie an den Anschlagflächen (5,6) zum Anliegen bringt, den Schieber des jeweils anderen Teiles berühren und ihn so verschieben, daß die Kupplungshälften freigelegt werden. Es ist auch möglich die Schieber an Werkzeug und Arm so zu formen und zu führen, daß sich die zwei zu den beiden Hälften einer Kupplung gehörenden Schieber gegenseitig berühren und so verschieben, daß die Kupplungshälften freigelegt werden.

## Patentansprüche

1. Befestigung eines mit einer hydraulischen Anlage ausgerüsteten Werkzeuges an einem Arm (1) einer mit einer Hydraulikanlage ausgerüsteten Maschine und Verbindung der beiden Hydraulikanlagen unter Verwendung von
- Anschlagflächen an denen Arm (1) und Werkzeug (2) aneinander anliegen,
- eines hydraulisch verschiebbaren Bolzens welcher vom Arm aus in eine Bohrung am Werkzeug (2) eingreift und
- eines Kupplungselementes zwischen zwei Teilen einer Hydraulikleitung, dessen beiden Hälften durch eine lineare Relativbewegung miteinander verbunden bzw. voneinander getrennt werden können,
**gekennzeichnet dadurch, daß**
- das mit einer Kupplungshälfte (7.1) abgeschlossene Ende des zur Hydraulikanlage der Maschine gehörenden Teiles der Hydraulikleitung an einem Bolzens (3) befestigt ist, welcher in einem Zylinder (4) am Arm (1) hydraulisch verschiebbar ist,
- daß am Werkzeug (2) die zweite Kupplungshälfte befestigt ist,
- daß an dieser zweiten Kupplungshälfte der zur Hydraulikanlage des Werkzeuges gehörende Teil der Verbindungsleitung angeschlossen ist und,
- daß dann wenn Arm (1) und Werkzeug (2) aneinander anliegen
- die direkte gerade Verbindungslinie zwischen den beiden Kupplungshälften parallel zur Bewegungsrichtung des Bolzens (3) liegt,
- die Kupplungshälften mit ihren zueinander gehörenden Verbindungsseiten zueinander ausgerichtet sind,
- sich die am Werkzeug befestigte Kupplungshälfte (7.2) an jener Stelle bezüglich des Zylinder (4) befindet, an welcher sie sich auch befinden würde, wenn sich der Bolzen in einer Endstellung befinden würde und die Kupplungshälfte (7.2) nur dadurch befestigt wäre, daß sie an der mit dem Bolzen (3) verbundenen Kupplungshälfte (7.1) in der Stellung "geschlossen" eingerastet wäre und,
- daß die Richtung in der der Bolzen aus der zuvor genannten Endstellung heraus bewegt werden kann gleich jener Richtung ist mit der die mit dem Bolzen verbundene Kupplungshälfte (7.1) bei stillstehender Kupplungshälfte (7.2) zum Trennen der Kupplungshälften bewegt werden muß und,
- daß der Weg, den der Bolzen (3) hydraulisch verschoben werden kann mindestens so lang ist, wie jene parallel zur Bewegungsrichtung des Bolzens liegende Strecke um die sich die beiden Kupplungshälften in zusammengestecktem Zustand überlappen.

2. Befestigung nach Anspruch 1 **gekennzeichnet dadurch, daß** der zur Hydraulikanlage der Maschine gehörende Teil der Verbindungsleitung der Hydrauliken durch eine durchgehende Bohrung (3.1) des Bolzens (3) verläuft, daß sich ein Ende der Bohrung an der dem Werkzeug zugewandten Stirnseite des Bolzens befindet und, daß an dieser Stelle die erste Hälfte (7.1) des Hydraulikkupplungselementes (7) befestigt ist.

3. Befestigung nach Anspruch 2 **gekennzeichnet dadurch, daß** die Stirnseite des Bolzens (3), mit einer gegenüber der Bohrung (3.1) erweiterten Öffnung (3.2) versehen ist, daß in dieser Öffnung eine Hälfte der Hydraulikkupplung (7) angeordnet ist und, daß die Öffnung (3.2) so tief ist, daß die Hälfte der Hydraulikkupplung nicht daraus hervorragt

4. Befestigung nach einem der vorgehenden Ansprüche, **gekennzeichnet dadurch, daß** als Bolzen (3) an welchem die eine Hälfte der Hydraulikkupplung befestigt ist, jener Bolzen verwendet wird, welcher sich in ausgefahrenem Zustand in eine Bohrung am Werkzeug hinein erstreckt.

5. Befestigung nach einem der vorhergehenden Ansprüche, **gekennzeichnet dadurch, daß** die werkzeugseitige Hälfte der Hydraulikkupplung über ein elastisches Verbindungselement (9) an dem Werkzeug (2) befestigt ist.

## Claims

1. Attachementof a tool furnished with a hydraulic equipment, attached to an arm of a machine which is furnished with an other hydraulic equipment and the connection of this both equipments is making use of
- contact surfaces by which the arm (1) and the tool (2) fit to each other,
- a bolt shiftable by hydraulic means and engaging into a bore hole of the tool (2) and beeing attached to said arm and
- a coupling-element inserted between two parts of a hydraulic line and the two halves of the coupling-element are fitted to beeing connected of or disconnected from each other by means of a translatoric movement relative to each other,
**characterized in that**
- the part of the hydraulic line attached to the machine which is locked at one end with one half (7.1) of said the coupling-element, is fixed at a bolt (3) which is shifted by hydraulic means in a cylinder (4) at said arm (1),
- that the other half of the coupling-element is attached to said tool (2),
- that with this said other half of the coupling-element this part of the hydraulic line is connected which is part of the hydraulic equipment of said tool and,
- that when said arm (1) and said tool (2) are in the fitting position
- the straight junction line between the two halves of said coupling-element is in parallel to the moving direction of said bolt (3),
- the halves of the coupling-element are aligned with the fitting side to each other,
- said other half (7.2) of said coupling-element attached to said tool is situated at that position in reference to the cylinder (4) which would be in the same position, if said bolt would be in an end-position and said other half (7.2) of the coupling-element would be solely fixed by locking in with said first half (7.1) of the coupling-element attached to said bolt (3) in the position "locked" and,
- that the direction of movement of said bolt out of the end-position is the same direction of movement in which the first half (7.1) of the coupling-element attached to said bolt is to be moved to disconnect the two halves of the coupling-element while said other half (7.2) is in a stoppage and,
- that the path of possible translation movement of the bolt (3) is at least as long as the distance of overlapping of the two halves of the coupling-element in the fitted position in parallel to the direction of movement of said bolt.

2. Attachement according to claim 1, **characterized in that** the part of the hydraulic connection-line of the both hydraulic equipments attached to the machine is conducted through a straight bore hole (3.1) of said bolt (3), that one of the ends of said bore hole is situated at the front side of said bolt vis à vis to said tool and that at this position the first half (7.1) of the hydraulic coupling (7) is attached.

3. Attachement according to one of prior claims, **characterized in that** the frontside of the bolt (3) is furnished with a wided opening (3.2) in respect to said bore hole (3.1), that in said opening the first half of the hydraulic coupling (7) is disposed and that said opening (3.2) has a depth said half of the hydraulic coupling not to project of said opening (3.2).

4. attachement according to one of prior claims, **characterized in that** this said bolt is used as bolt (3) with said half of the hydraulic coupling beeing attached to and said bolt (3) projects in a driven out position into a boring of said tool.

5. attachement according to one of prior claims, **characterized in that** the half of said hydraulic coupling attached to the tool (2) is fixed to said tool by means of an elastic connecting element (9).

## Revendications

1. La fixation d'un outil de l'équipement hydraulique, attaché à un bras d'une machine, qui est équipée avec encore un équipement hydraulique et le attachement de ces deux équipements hydrauliques fait usage de
- les surfaces de contact au moyens de ces-que le bras (1) et l'outil (2) sont relies,
- un boulon qui est coulissant avec de moyens hydrauliques qui engrène dans un trou de l'outil (2) et qui est fixé à les bras mentioné et
- un élément de couplage qui est placé entre les deux parts d'une conduit hydraulique et les deux moitiés de l'élément de couplage sont muniées pour embrayer ou débrayer l'un de l'autre par mouvement relatif linéaire,
characterisé en ce que
- ce part de l'élément hydraulique étant fixé à la machine dont l'un bout est fermé avec une première moitié (7.1) de l'élément de couplage mentioné est attachée à un boulon (3) qui est coulissant par un cylindre hydraulique (4) au bras (1) mentioné,
- que la deuxième moitié (7.2) de l'élément de couplage est attachée à l'outil (2) mentioné,
- que avec cette deuxième moitié mentioné de l'élément de couplage ce part de la conduit hydraulique est attachée qui est un part de 1' equipement hydraulique de l'outil mentioné, et
- que en ce cas le bras (1) mentioné et l'outil (2) mentioné sont à la position adjointe,
- la ligne de jonction entre les deux moitiés de l'élément de couplage mentioné est en parallèle à la direction de mouvement de boulon (3) mentioné,
- les moitiés de l'élément de couplage sont alignées avec les surfaces de couplage vis à vis,
- la deuxième moitié (7.2) de l'élément de couplage qui est attachée à l'outil (2) mentioné est à cette position relative au cylindre (4) mentioné qui aie la même position que la position du boulon si le boulon etait à une position du bout et la deuxième moitié (7.2) de l'élément de couplage resait fixé en verouillant à la première moitié (7.1) mentionée de l'élément de couplage qui est attachée au boulon (3) mentioné à la position "en barrage" et,
- que la direction de mouvement du boulon mentioné hors de la position du bout est la même diection de mouvement à laquelle la première moitié (7.1) mentionée de l'élément de couplage qui est en en mouvant pour debrayées les deux moitiés de l'élément de couplage le deuxième moitié étant à une position d'arrêt et,
- que le cours possible de mouvement coulissant du boulon (3) mentioné est au moins de la même lonqueur que la distance des deux moitiés de l'élément de couplage, s'engrènement à la position d'embrayage, vue en parallèle à la direction de mouvement du boulon mentioné.

2. La fixation selon revendication 1, characterisée en ce que le part de conduit hydraulique d'équipement hydraulique de la machine étant part des équipements hydrauliques se conduit à travers d'une perforation alignée (3.1) du boulon (3) mentioné, que l'un des bouts de la perforation est positioné à la face frontale du boulon mentioné, étant vis à vis a l'outil mentioné et que à cette position la première moitié (7.1) de l'élément de couplage hydraulique (7) est attachée au boulon mentioné.

3. La fixation selon revendication 2, characterisée en ce que la face frontale du boulon (3) est munie d'une orifice elagi (3.2) comparé à la perforation (3.1) mentioné, que dans l'orifice mentioné la première moitié (7.1) de couplage hydraulique est disposée et l'orifice mentioné (3.2) a une profondeur que la moitié mentioné de couplage hydraulique ne dépasse pas de l'orifice (3.2) mentionée.

4. La fixation selon une des revendication précedantes, characterisée en ce que ce boulon mentioné est utilisé comme boulon (3) à lequel la moitié mentioné de couplage hydraulique y est attaché et le boulon (3) mentioné s'étend vers la perforation de l'outil mentioné.

5. La fixation selon une des revendication précedantes, characterisée en ce que la moitié mentioné de couplage hydraulique est attaché à l'outil (2) au moyen d'un l'élément élastique relié.
